# EUROPÄISCHE PATENTANMELDUNG

(11) **EP 2 343 503 A1**
(43) Veröffentlichungstag der Anmeldung: **13.07.2011**
(21) Anmeldenummer: 10195361.0
(22) Anmeldetag: 16.12.2010
(51) Int. Cl.: G01C 21/36, G06F 3/048

(54) **Verfahren zum Betrieb eines Navigationsgeräts**

(30) Priorität: 07.01.2010 DE 102010004179
(71) Anmelder: Navigon AG, 20251 Hamburg (DE)
(72) Erfinder: Angenvoort, Johannes, 97076, Würzburg (DE)
(74) Vertreter: von den Steinen, Axel

(57) **Zusammenfassung**

Die Erfindung betrifft ein Verfahren zum Betrieb eines Navigationsgeräts mit einer Anzeigeeinrichtung (01), an deren Bildoberfläche (02) Bildinhalte, insbesondere Kartenansichten (03), elektronisch steuerbar anzeigbar sind, wobei die Anzeigeeinrichtung (01) eine berührungssensitive und/oder bewegungssensitive Eingabesensorik aufweist, mit der vom Bediener ausgeführte Eingabeberührungen auf der Bildoberfläche (02) und/oder vom Bediener ausgeführte Eingabegesten über der Bildoberfläche (02) detektierbar sind,
mit folgenden Verfahrensschritten:
a) Berechnung und Anzeige einer Kartenansicht (03a) an der Bildoberfläche (02),
b) Selektion von zumindest zwei Kartenausschnitten (14, 15) aus der angezeigten Kartenansicht (03a) durch Detektion von zwei Selektionspunkten (04, 05) auf der Bildoberfläche (02), wobei die Selektionspunkte durch Eingabeberührungen auf der Bildoberfläche (02) und/oder durch Eingabegesten über der Bildoberfläche (02) bestimmt sind,
c) Detektion einer Änderung des Abstandes zwischen den beiden Selektionspunkten (04, 05),
d) Neuberechnung und Neuanzeige einer neuen Kartenansicht (03b), wobei die beiden selektierten Kartenausschnitte (14, 15) entsprechend der Abstandsänderung der Selektionspunkte (04, 05) einander angenähert oder weiter voneinander entfernt dargestellt werden.

## Beschreibung

Die Erfindung betrifft ein Verfahren zum Betrieb eines Navigationsgeräts nach dem Oberbegriff des Anspruchs 1.

Bekannte Navigationsgeräte sind mit einer Anzeigeeinrichtung, beispielsweise einem LCD-Bildschirm, ausgestattet, die als optische Schnittstelle zum Benutzer dient. An der Bildoberfläche dieser Anzeigeeinrichtung können insbesondere Kartenansichten angezeigt werden, um dem Benutzer die Orientierung zu ermöglichen.

Weiter sind Navigationsgeräte bekannt, deren Anzeigeeinrichtung zugleich auch als Eingabeschnittstelle dient. Dazu werden beispielsweise so genannte Touch-Screens eingesetzt. Bei diesen Touch-Screens ist die Bildoberfläche mit einer berührungssensitiven Eingabesensorik ausgestattet, so dass vom Benutzer ausgeführte Berührungen auf der Bildoberfläche detektiert werden können. Alternativ zu diesen Touch-Screens sind auch Anzeigeeinrichtungen mit einer bewegungssensitiven Eingabesensorik bekannt. Dabei kann es sich beispielsweise um eine Kamera handeln, die Bewegungen und Gesten über der Bildoberfläche erfassen und mittels einer Auswerteelektronik auswerten kann.

Beim Einsatz bekannter Navigationsgeräte ist es bekannt, dass bestimmte Kartenausschnitte ausgewählt und anschließend entweder verschoben (Pannen) oder in ihrem Darstellungsmaßstab verändert (Zoomen) werden. Bei der Verwendung eines Touch-Screens ist es beispielsweise möglich, durch Berührung der Bildoberfläche einen bestimmten Kartenausschnitt aus der zuvor dargestellten Kartenansicht zu selektieren und den selektierten Kartenausschnitt durch Bewegungen auf der Bildoberfläche zu verschieben oder zu vergrößern bzw. zu verkleinern.

Im Bereich der Benutzerschnittstellen hat sich außerdem zunehmend die so genannte Multi-Touch-Technologie etabliert. Diese Technologie wird beispielsweise in der EP 1 969 452 A2 beschrieben. Die Multi-Touch-Technologie ermöglicht es, dass der zur Anzeige verwendete Touch-Screen an mehreren Stellen gleichzeitig berührt oder mit Bewegungsgesten überfahren wird. Die bekannten Bedienkonzepte von Navigationsgeräten nutzen die Möglichkeiten von Multi-Touch Ein- und Ausgabeschnittstellen nur unvollständig aus. So ist es bisher beispielsweise nicht möglich, dass die digital angezeigte Kartenansicht in einem Faltbereich umgefaltet wird, so dass voneinander entfernt liegende Kartenausschnitte direkt nebeneinander zum Liegen kommen. Diese Art der Nutzung einer Karte ist dem Benutzer aus dem Bereich der Papierkarten vertraut und ermöglicht es, dass voneinander entfernt liegende Kartenausschnitte direkt nebeneinander liegend betrachtet werden können.

Aufgabe der vorliegenden Erfindung ist es deshalb, ein Verfahren zum Betrieb eines elektronischen Navigationssystems vorzuschlagen, das unter Verwendung der neuen Eingabeschnittstellen eine Nutzung der elektronisch angezeigten Kartenansichten ermöglicht, die der Nutzung von Papierkarten angenähert ist.

Diese Aufgabe wird durch ein Verfahren nach der Lehre des Anspruchs 1 gelöst.

Bevorzugte Ausführungsformen der Erfindung sind Gegenstand der Unteransprüche.

Ausgangspunkt des erfindungsgemäßen Verfahrens ist die Berechnung und Anzeige einer Kartenansicht an der Bildoberfläche der Anzeigeeinrichtung. Gemäß dem Grundgedanken des erfindungsgemäßen Verfahrens ist danach vorgesehen, dass zumindest zwei Kartenausschnitte aus der angezeigten Kartenansicht durch, insbesondere gleichzeitige, Detektion von zwei Selektionspunkten auf der Bildoberfläche selektiert werden. Diese Detektion der beiden Selektionspunkte erfolgt dabei durch Verwendung beispielsweise eines Multi-Touch-Displays, wobei der Benutzer die Bildoberfläche des Multi-Touch-Displays zugleich an zwei Stellen berührt. Alternativ dazu kann der Benutzer bei Verwendung andersartiger Eingabeschnittstellen, beispielsweise mit kameragestützter Gestenerkennung, zwei Kartenausschnitte durch entsprechende Eingabegesten markieren.

Hat der Benutzer zwei Kartenausschnitte aus der angezeigten Kartenansicht selektiert und ist diese Selektion durch entsprechende Auswertung der Eingabeschnittstelle detektiert worden, so wird im nächsten Schritt des erfindungsgemäßen Verfahrens die Änderung des Abstands zwischen den beiden Selektionspunkten selektiert. Diese Änderung des Abstands zwischen den beiden Selektionspunkten kann beispielsweise dadurch verursacht werden, dass der Benutzer seine beiden, die Bildoberfläche des Multi-Touch-Displays berührenden Finger einander annähert. Sobald eine solche Änderung des Abstands zwischen den beiden Selektionspunkten detektiert wurde, erfolgt automatisch eine Neuberechnung und Neuanzeige der Kartenansicht. In dieser neu berechneten Kartenansicht werden dann die beiden selektierten Kartenausschnitte entsprechend der Abstandsänderung der Selektionspunkte einander angenähert oder weiter voneinander entfernt dargestellt. Im Ergebnis erhält der Benutzer also dadurch die Möglichkeit, zwei Kartenausschnitte aus der ursprünglich angezeigten Kartenansicht durch gleichzeitige Berührung der Bildoberfläche in zwei Selektionspunkten auszuwählen und die auf diese Weise selektierten Kartenausschnitte einander angenähert oder voneinander entfernt neu in der nächsten Kartenansicht darstellen zu lassen.

Gemäß einer bevorzugten Ausführungsform der Erfindung ist vorgesehen, dass der Teil der ursprünglichen Kartenansicht, der zwischen den beiden selektierten Kartenausschnitten liegt, bei der Neuanzeige der Kartenansicht ausgeblendet oder zurückgedrängt dargestellt oder verkleinert dargestellt wird. Wird der zwischen den beiden selektierten Kartenausschnitten liegende Teil der ursprünglichen Kartenansicht ausgeblendet, so ergibt sich letztendlich eine Darstellungsform, die dem Umfalten einer Papierkarte entspricht. Denn zwei Kartenausschnitte können unmittelbar nebeneinander liegend dargestellt werden, wo sie in der Ausgangskarte nicht aneinander grenzen. Der umgefaltete Kartenbereich wird in der elektronischen Darstellung bei dieser Darstellungsform ausgeblendet.

Um dem Benutzer bei Verwendung des erfindungsgemäßen Verfahrens mit der Neuanzeige der Kartenansicht zu verdeutlichen, dass die nebeneinander liegend dargestellten Kartenausschnitte nicht direkt aneinander grenzen, ist es besonders vorteilhaft, wenn der zwischen den beiden selektierten Kartenausschnitten liegende Teil der ursprünglichen Kartenansicht bei der Neuanzeige der Kartenansicht optisch markiert wird. Auf diese Weise kann beispielsweise angezeigt werden, dass ein bestimmter Teil der Kartenansicht entsprechend der Faltung einer Papierkarte ausgeblendet wurde. Der auf diese Weise ausgeblendete Teil der elektronisch angezeigten Kartenansicht wird dann beispielsweise durch ein Symbol, beispielsweise einen breiteren Streifen, optisch markiert.

Gemäß einer bevorzugten Ausführungsform der Erfindung ist es vorgesehen, dass zumindest einer der selektierten Kartenausschnitte bei der Neuanzeige der Kartenansicht in einem vergrößerten Maßstab dargestellt wird. Auf diese Weise kann erreicht werden, dass neben dem Verschieben der beiden Kartenausschnitte auch zumindest einer der Kartenausschnitte herangezoomt und vergrößert dargestellt wird. Es ist dabei beliebig, ob die Darstellung des vergrößerten bzw. verschobenen Kartenausschnitts bereits schon während der Bewegung des Bedieners kontinuierlich oder erst am Ende des Bedienvorgangs durchgeführt wird.

Um dem Benutzer die intuitive Nutzung der Kartenansicht bei Veränderung des Darstellungsmaßstabs zu ermöglichen, ist es besonders vorteilhaft, wenn nach der Detektion einer vorbestimmten Eingabe, mit der einer der selektierten Kartenausschnitte ausgewählt wird, bei der Neuanzeige der Kartenansicht der Maßstab des durch die Eingabe ausgewählten Kartenausschnitts auf die gesamte Kartenansicht angewendet wird. Ist beispielsweise einer der selektierten Kartenausschnitte in einem vergrößerten Maßstab angezeigt und wählt der Benutzer diesen vergrößert dargestellten Kartenausschnitt durch eine Doppelklickberührung aus, kann der Darstellungsmaßstab dieses Kartenausschnitts auf die gesamte Kartendarstellung angewendet und die nächste Kartenansicht in diesem Maßstab angezeigt werden.

Alternativ bzw. additiv zu dieser Verfahrensvariante ist es auch möglich, dass nach Detektion einer vorbestimmten Eingabe bei der Neuanzeige der Kartenansicht der Maßstab der ursprünglichen Kartenansicht auf die gesamte Kartenansicht angewendet wird. Dies kann beispielweise dadurch realisiert werden, dass ein Doppelklick auf der Bildoberfläche außerhalb eines der selektierten Kartenausschnitte detektiert wird, wobei diese Detektion dann dahingehend zu interpretieren ist, dass beim nächsten Refresh der Kartenansicht der Maßstab der ursprünglichen Kartenansicht auf die gesamte Kartenansicht angewendet wird.

In welcher Weise die Kartenausschnitte in Abhängigkeit der Lage der Selektionspunkte auf der Bildoberfläche selektiert werden, ist grundsätzlich beliebig. Gemäß einer bevorzugten Ausführungsform kann dies dadurch geschehen, dass abhängig von der Lage der Selektionspunkte eine Trenngerade berechnet wird. Die Trenngerade ist dabei dadurch definiert, dass sie rechtwinklig zur Verbindungslinie zwischen den beiden Selektionspunkten und durch den Mittelpunkt der Verbindungslinie verläuft. Beidseitig dieser Trenngeraden werden dann als Faltstreifen bezeichnete Kartenbereiche definiert, die in der Neuanzeige der Kartenansicht nicht mehr dargestellt oder verkleinert dargestellt werden. Die beidseitig neben den beiden Faltstreifen verbleibenden Teile der ursprünglichen Kartenansicht bilden dann die beiden selektierten Kartenausschnitte, die bei der Neuanzeige der Kartenansicht, insbesondere vergrößert, dargestellt werden.

Die Größe der beiden in der neuen Kartenansicht nicht mehr bzw. verkleinert darzustellenden Faltstreifen kann bevorzugt in Abhängigkeit von der Änderung des Abstands zwischen den beiden Selektionspunkten berechnet werden. Dies entspricht einem intuitiven Bedienkonzept, da der Benutzer durch eine große Annäherung der beiden Selektionspunkte ein weiträumiges Umfalten der elektronisch angezeigten Karten bewirken kann.

Gemäß einer weiteren bevorzugten Verfahrensvariante ist es vorgesehen, dass die aktuelle Position des Navigationsgeräts mittels einer Positionsbestimmungseinheit, beispielsweise einem GPS-Modul, bestimmt wird. Wird die aktuelle Position des Navigationsgeräts dann in der Kartenansicht eingeblendet, so ist es besonders vorteilhaft, wenn die Darstellung des Positionssymbols abhängig davon, ob die aktuelle Position innerhalb oder außerhalb der selektierten Kartenausschnitte liegt, verändert wird. Dadurch kann dem Benutzer signalisiert werden, ob der aktuelle Standort in der gefalteten Darstellung der Kartenansicht liegt oder nicht.

In einer weiteren vorteilhaften Ausbringung des erfindungsgemäßen Verfahrens kann in die Kartenansicht eine Legende eingeblendet werden, um das Lesen der Karte zu erleichtern. Gemäß der bevorzugten Verfahrensvariante ist dabei vorgesehen, dass die in der Legende erläuterten Kartensymbole abhängig davon bestimmt werden, welche Kartensymbole in den selektierten Kartenausschnitten vorhanden sind. Auf diese Weise wird erreicht, dass dem Benutzer nur die Kartensymbole in der Legende erläutert werden, die in den selektierten Kartenausschnitten auch vorhanden sind, so dass die Größe der darzustellenden Legende entsprechend begrenzt wird.

Wird eine Legende in der Kartenansicht eingeblendet, ist es außerdem besonders vorteilhaft, wenn diese Legende durch Eingabeberührungen auf der Bildoberfläche und/oder durch Eingabegesten über der Bildoberfläche gescrollt werden kann. Auf diese Weise können auch längere Legenden durch den Benutzer in einfacher Weise abgelesen werden, ohne dass zu viel Darstellungsplatz für die Darstellung der Legende notwendig ist.

Eine Ausführungsform der Erfindung wird anhand der Zeichnungen nachfolgend beispielhaft erläutert.

Es zeigen:
- Fig. 1: eine beispielhafte Kartenansicht eines Navigationsgeräts vor der Durchführung des erfindungsgemäßen Verfahrens;
- Fig. 2: eine ausgehend von der Kartenansicht in Fig. 1 mithilfe des erfindungsgemäßen Verfahrens berechnete Kartenansicht.

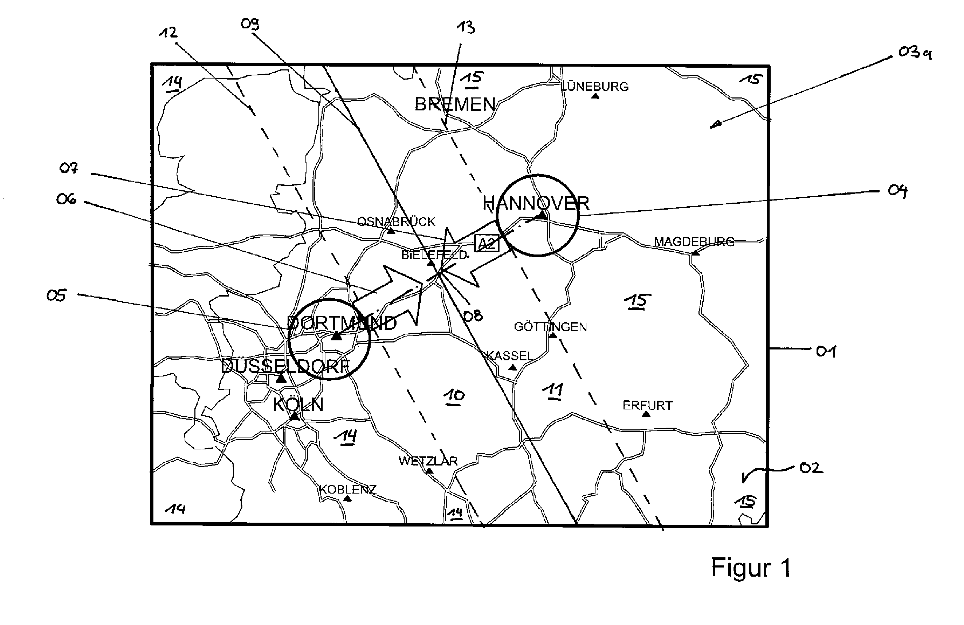

Fig. 1 zeigt beispielhaft eine Anzeigeeinrichtung 01 eines Navigationsgeräts. Diese Anzeigeeinrichtung 01 ist dabei in der Art eines Multi-Touch-Displays ausgebildet, so dass mehrere parallel ausgeführte Eingabeberührungen an der Bildoberfläche 02 selektiert werden können.

In dem in Fig. 1 dargestellten Beispiel wird an der Bildoberfläche 02 zunächst eine Kartenansicht 03 angezeigt, die das Autobahnnetz im Nordwesten Deutschlands darstellt. Es handelt sich um eine 2D-Darstellung mit gleichem Darstellungsmaßstab über die ganze Bildoberfläche 02.

In dem dargestellten Anwendungsbeispiel ist es Ziel des Anwenders, einen Zoomvorgang durchzuführen, um eine detaillierte Darstellung von Straßen und anderen graphischen Elementen angezeigt zu bekommen, die im Bereich von Dortmund und Hannover liegen. Denn in dem Beispiel ist hervorzuheben, dass die Route zwischen Hannover und Dortmund sehr leicht zu befahren ist, wenn erst einmal die Autobahn A2 erreicht ist. Interessant für den Benutzer ist es deshalb, insbesondere den Bereich von Dortmund und Hannover, d.h. das Abfahrtsgebiet und das Zielgebiet, in einem vergrößerten Maßstab angezeigt zu bekommen.

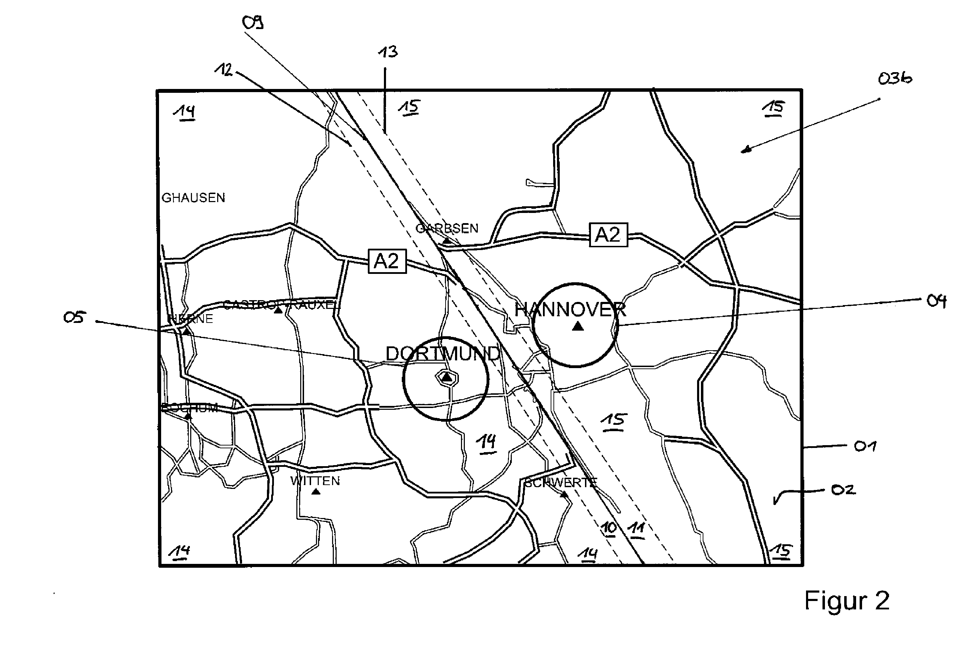

Um dies zu realisieren, berührt der Benutzer die Bildoberfläche 02 in den zwei Selektionspunkten 04 und 05, d.h. in den Kartenbereichen, in denen Dortmund und Hannover liegen. Anschließend fährt der Benutzer die beiden Selektionspunkte 04 und 05 durch eine entsprechende Fingerbewegung über die Bildoberfläche 02 einander an, was in Fig. 1 durch die Bewegungspfeile 06 und 07 angedeutet ist. Sobald die Auswertesteuerung der Anzeigeeinrichtung 01 die Berührung in den Selektionspunkten 04 und 05 und deren Annäherung durch entsprechende Bewegung über die Bildoberfläche 02 detektiert hat, wird automatisch eine neue Kartenansicht berechnet und angezeigt. Diese neu berechnete Kartenansicht 03b ist in Fig. 2 dargestellt.

Für die Neuberechnung der Kartenansicht 03b, wie sie beispielhaft in Fig. 2 dargestellt ist, wird in der ursprünglichen Kartenansicht 03a zunächst die Verbindungslinie 08 zwischen der Mitte der beiden Selektionspunkte 04 und 05 berechnet. Davon ausgehend wird eine Trenngerade 09 berechnet, die senkrecht zur Verbindungslinie 08 verläuft und die Verbindungslinie 08 in deren Mittelpunkt schneidet. Beiderseits der Trenngeraden 09 werden zwei als Faltstreifen 10 und 11 bezeichnete Bereiche berechnet, deren seitliche Begrenzung durch die Grenzlinien 12 und 13 strichliniert angedeutet ist. Die Breite der beiden Faltstreifen 10 und 11 entspricht dabei der Annäherung der beiden Selektionspunkte 04 und 05.

Durch die beiden Faltstreifen 10 und 11 und die dazwischenliegende Trenngerade 09 werden die selektierten Kartenausschnitte 14 und 15 definiert, die in der neuberechneten Kartenansicht 03b dargestellt werden sollen.

In Fig. 2 sind die beiden selektierten Kartenausschnitte 14 und 15 jeweils in einem vergrößerten Maßstab dargestellt. Die beiden Faltstreifen 10 und 11 sind in der neuberechneten Kartenansicht 03b auf einen ganz schmalen Bereich zusammengeschoben dargestellt, so dass auf der Bildoberfläche 02 gleichzeitig der Umgebungsbereich von Dortmund und der Umgebungsbereich von Hannover angezeigt werden kann. Um dem Benutzer zu verdeutlichen, dass die in Fig. 2 dargestellte Kartenansicht 03b Kartenausschnitte darstellt, die in Wirklichkeit nicht unmittelbar benachbart sind, können die Trenngerade 09 und/oder die Grenzlinien 12 und 13 in die Kartenansicht 03b eingeblendet werden.

## Patentansprüche

1. Verfahren zum Betrieb eines Navigationsgeräts mit einer Anzeigeeinrichtung (01), an deren Bildoberfläche (02) Bildinhalte, insbesondere Kartenansichten (03), elektronisch steuerbar anzeigbar sind, wobei die Anzeigeeinrichtung (01) eine berührungssensitive und/oder bewegungssensitive Eingabesensorik aufweist, mit der vom Bediener ausgeführte Eingabeberührungen auf der Bildoberfläche (02) und/oder vom Bediener ausgeführte Eingabegesten über der Bildoberfläche (02) detektierbar sind,
mit folgenden Verfahrensschritten:
a) Berechnung und Anzeige einer Kartenansicht (03a) an der Bildoberfläche (02),
b) Selektion von zumindest zwei Kartenausschnitten (14, 15) aus der angezeigten Kartenansicht (03a) durch Detektion von zwei Selektionspunkten (04, 05) auf der Bildoberfläche (02), wobei die Selektionspunkte durch Eingabeberührungen auf der Bildoberfläche (02) und/oder durch Eingabegesten über der Bildoberfläche (02) bestimmt sind,
c) Detektion einer Änderung des Abstandes zwischen den beiden Selektionspunkten (04, 05),
d) Neuberechnung und Neuanzeige einer neuen Kartenansicht (03b), wobei die beiden selektierten Kartenausschnitte (14, 15) entsprechend der Abstandsänderung der Selektionspunkte (04, 05) einander angenähert oder weiter voneinander entfernt dargestellt werden.

2. Verfahren nach Anspruch 1,
**dadurch gekennzeichnet,**
**dass** der Teil (10, 11) der ursprünglichen Kartenansicht (03a), der zwischen den beiden selektierten Kartenausschnitten (14, 15) liegt, bei der Anzeige der neuen Kartenansicht (03b) ausgeblendet wird oder zurückgedrängt dargestellt wird oder verkleinert dargestellt wird.

3. Verfahren nach Anspruch 1 oder 2,
**dadurch gekennzeichnet,**
**dass** der Teil (10, 11) der ursprünglichen Kartenansicht (03a), der zwischen den beiden selektierten Kartenausschnitten (14, 15) liegt, bei der Anzeige der neuen Kartenansicht (03b) optisch markiert wird.

4. Verfahren nach einem der Ansprüche 1 bis 3,
**dadurch gekennzeichnet,**
**dass** zumindest einer der selektierten Kartenausschnitte (14, 15) bei der Anzeige der neuen Kartenansicht (03b) automatisch in einem veränderten, insbesondere vergrößerten, Maßstab dargestellt wird.

5. Verfahren nach einem der Ansprüche 1 bis 4,
**dadurch gekennzeichnet,**
**dass** nach der Detektion einer vorbestimmten Eingabe, mit der einer der selektierten Kartenausschnitte (14, 15) ausgewählt wird, bei der Anzeige der nächsten Kartenansicht (03) der Maßstab des durch die Eingabe ausgewählten Kartenausschnitts (14, 15) auf die gesamte Kartenansicht (03) angewendet wird.

6. Verfahren nach Anspruch 5,
**dadurch gekennzeichnet,**
**dass** nach der Detektion eines Doppelklicks auf die Bildoberfläche (02) innerhalb eines der selektierten Kartenausschnitte (14, 15) veranlasst wird, dass bei der Anzeige der nächsten Kartenansicht (03) der Maßstab des durch den Doppelklick ausgewählten Kartenausschnitts (14, 15) auf die gesamte Kartenansicht (03) angewendet wird.

7. Verfahren nach einem der Ansprüche 1 bis 6,
**dadurch gekennzeichnet,**
**dass** nach der Detektion einer vorbestimmten Eingabe bei der Anzeige der nächsten Kartenansicht (03) der Maßstab der ursprünglichen Kartenansicht (03a) auf die gesamte Kartenansicht (03) angewendet wird.

8. Verfahren nach Anspruch 7,
**dadurch gekennzeichnet,**
**dass** nach Detektion eines Doppelklicks auf die Bildoberfläche (02) außerhalb eines der selektierten Kartenausschnitte (14, 15) veranlasst wird, dass bei der Anzeige der nächsten Kartenansicht (03) der Maßstab der ursprünglichen Kartenansicht (03a) auf die gesamte Kartenansicht (03) angewendet wird.

9. Verfahren nach einem der Ansprüche 1 bis 8,
**dadurch gekennzeichnet,**
**dass** für die Selektion der Kartenausschnitte (14, 15) in Abhängigkeit der Lage der Selektionspunkte (04, 05) in der ursprünglichen Kartenansicht (03a) eine Trenngerade (09) berechnet wird, wobei die Trenngerade (09) rechtwinkelig zur Verbindungslinie (08) zwischen den beiden Selektionspunkten (04, 05) und durch den Mittelpunkt der Verbindungslinie (08) verläuft, und wobei beidseitig neben der Trenngeraden (09) zwei parallel zur Trenngeraden (09) verlaufende Faltstreifen (10, 11) vorgesehen sind, die beide in der Anzeige der neuen Kartenansicht (03b) ausgeblendet werden oder zurückgedrängt dargestellt werden oder verkleinert dargestellt werden, und wobei die beidseitig neben den Faltstreifen (10, 11) verbleibenden Teile der ursprünglichen Kartenansicht (03a) die beiden selektierten Kartenausschnitte (14, 15) definieren, die bei Anzeige der neuen Kartenansicht (03b) zumindest teilweise, insbesondere vergrößert, dargestellt werden.

10. Verfahren nach Anspruch 9,
**dadurch gekennzeichnet,**
**dass** die Breite der Faltstreifen (10, 11) in Abhängigkeit von der Änderung des Abstandes zwischen den beiden Selektionspunkten (04, 05) berechnet wird.

11. Verfahren nach einem der Ansprüche 1 bis 10,
**dadurch gekennzeichnet,**
**dass** die aktuelle Position des Navigationsgeräts mit einer Positionsbestimmungseinheit, insbesondere mit einem GPS-Modul, bestimmt wird, wobei die aktuelle Position mit einem Positionssymbol in der Kartenansicht (03) eingeblendet wird, und wobei die Darstellungsform des Positionssymbols abhängig davon, ob die aktuelle Position innerhalb oder außerhalb der selektierten Kartenausschnitte (14, 15) liegt, verändert wird.

12. Verfahren nach Anspruch 11,
**dadurch gekennzeichnet,**
**dass** in die Kartenansicht (03) eine Legende eingeblendet wird, wobei die in der Legende erläuterten Kartensymbole abhängig davon bestimmt werden, welche Kartensymbole in den selektierten Kartenausschnitten (14, 15) vorhanden sind.

13. Verfahren nach Anspruch 11 oder 12,
**dadurch gekennzeichnet,**
**dass** in der eingeblendeten Legende durch Eingabeberührungen auf der Bildoberfläche und/oder durch Eingabegesten über der Bildoberfläche gescrollt wird.
